Europäisches Patentamt

European Patent Office

Office européen des brevets

(11) Publication number: **0 392 075**
**A1**

## EUROPEAN PATENT APPLICATION

(21) Application number: **89116132.5**

(22) Date of filing: **31.08.89**

(51) Int. Cl.⁵: **A47J 43/22**

(30) Priority: **10.04.89 IL 89892**

(43) Date of publication of application:
**17.10.90 Bulletin 90/42**

(84) Designated Contracting States:
**AT BE CH DE ES FR GB GR IT LI NL SE**

(71) Applicant: **Zinger, Baruch**
**7 Rehov Haotzkin**
**Bat Yam(IL)**

(72) Inventor: **Zinger, Baruch**
**7 Rehov Haotzkin**
**Bat Yam(IL)**

(74) Representative: **Vossius & Partner**
**Siebertstrasse 4 P.O. Box 86 07 67**
**D-8000 München 86(DE)**

(54) **Domestic sifting device.**

(57) A sifting device for powderous or finely granular material comprises a conventional circular or polygonal frame(3) in the shape of a low cylinder or polygon having a fine meshed net sheet (10) spanned at its bottom side, there being set onto the edge of the said frame (3) which is opposite the said net sheet - a spider(5) in the centre of which is rotatably held a shaft (7) which extends towards the net sheet, a rake or comb like body (9) being attached to said shaft(7) and extending across and in contact with the said net sheet(10),a crank handle(8) being keyed to the said shaft(7) for rotating it.

FIG 2

The present invention concerns a domestic device for sifting powderous materials, such as flour or the like.

Housewifes who use the conventional devices, which generally consist of a round frame at one side of which a sifting or screening sieve is provided, must continuously shake and rattle the device in order to keep the powderous mass in motion. This is a far from convenient procedure and is, in the case of a large device intended for sifting relatively large quantities, rather tiring.

It is the object of the invention to relieve the housewife (or other operator) from the tiring or otherwise inconvenient shaking of the sieve.

According to the invention the new device comprises the conventional circular or polygonal frame in the shape of a low cylinder or polygon (whose side walls stand on edge) having a fine meshed net sheet spanned at its bottom side, there being set onto the edge of the said frame which is opposite the said net sheet - a spider in the centre of which is rotatably held a shaft which extends towards the net sheet, a rake or comb like body being attached to said shaft and extending across and in contact with the said net sheet, a crank handle or like means being keyed to the said shaft for rotating it.

These and further features of the invention will become clear from the following detailed description which refers to the annexed drawings. In these:

Fig. 1 is an elevational view of the new device while in use.

Fig. 2 is an elevational section of the device, and

Fig. 3 is a plan view.

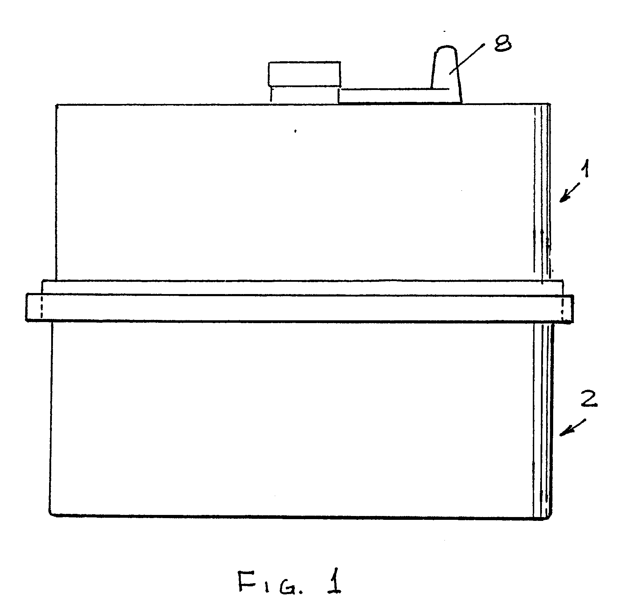

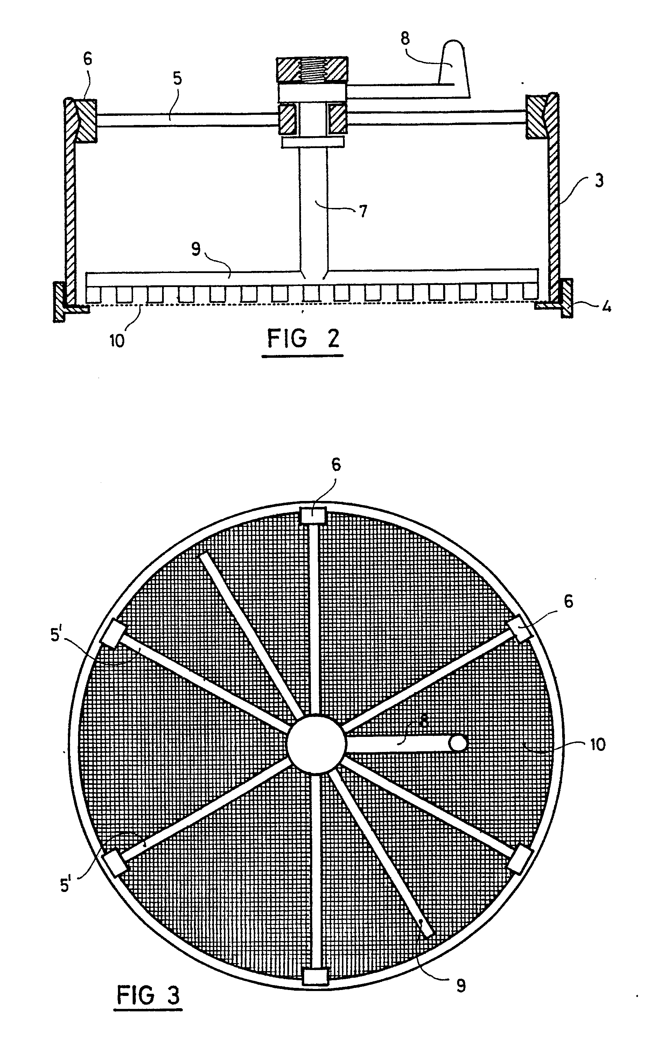

Turning first to Fig. 1, the new device indicated as a whole by numeral 1 is set, as is usually and conventionally done, on a pot or bowl 2. Its use in this position will become clear from Figs. 2 and 3.

The cylindrical frame 3 of the device is generally of known build. Its lower edge is advantageously formed as a bead 4 surrounding a circular recess 5 into which the edge of a bowl 2 (see Fig. 1) could enter. Onto the upper edge of frame 3 is removably set a spider 5, the free ends 6 of whose arms 5′ are shaped hook like to provide a secure seat on the edge of frame 3. In the centre of spider 5 turns a shaft which can be revolved by means of a crank handle 8. On the lowermost end of shaft 7 is carried a rake- or comb like member 9, the teeth of which extend to the plane of a fine mesh sheet 10.

For use of the new device, the spider 5 with the appended parts 7,8,9 is removed from frame 3 and the mass to be sifted is poured onto the sheet 10. Now the spider with parts 7,8,9 is re-set on frame 3 and the device is set on a container, such as a pot or bowl into which the sifted powder is expected to drop. The member 9 is now made to move over the whole of sheet 10 thereby continuously shifting the mass of powder over the whole extension of sheet 10.

It will be seen that in this way the desired and necessary motion is imparted to the mass to be sifted, without rattling and shaking the sieve, as had been the case heretofore.

## Claims

1. A sifting device for powderous or finely granular material, which comprises a circular or polygonal frame in the shape of a low cylinder or polygon, whose side walls stand on edge, having a fine meshed net sheet spanned at its bottom side, there being set onto the edge of the said frame which is opposite the said net sheet a spider in the centre of which is rotatably held a shaft which extends towards the net sheet, a rake or comb like body being attached to said shaft and extending across and in contact with the said net sheet, a crank handle means being keyed to the said shaft for rotating it.

2. The device claimed in claim 1, characterised thereby that the said spider is removably held on the edge of the frame.

3. A sifting device for powderous or finely granular material, substantially as hereinbefore described with reference to and as illustrated in the accompanying drawings.

FIG. 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-C-14465 (GEBR. ARNDT)<br>* the whole document * | 1 | A47J43/22 |
| Y | | 2, 3 | |
| Y | US-A-1688429 (MURDEN)<br>* page 1, lines 28 - 77; figures 1, 2 * | 2, 3 | |
| A | US-A-3247875 (RICHNER)<br>* column 2, line 12 - column 4, line 11; figure 1 * | 1-3 | |
| A | GB-A-1142074 (REXALL DRUG AND CHEMICAL COMPANY)<br>* page 2, line 81 - page 4, line 82; figures * | 1 | |
| A | US-A-2190987 (JACKSON)<br>* the whole document * | 1 | |

TECHNICAL FIELDS
SEARCHED (Int. Cl.5 )

A47J
B07B

The present search report has been drawn up for all claims

| Place of search | Date of completion of the search | Examiner |
|---|---|---|
| THE HAGUE | 13 JULY 1990 | BODART P. |